# EUROPEAN PATENT SPECIFICATION

(11) **EP 2 418 899 B1**
(45) Date of publication and mention of the grant of the patent: **08.08.2018**
(21) Application number: 09842896.4
(22) Date of filing: 24.12.2009
(51) Int. Cl.: H04W 72/12

(54) **PROCESSING METHOD FOR GROUP RESOURCE ALLOCATION**
VERARBEITUNGSVERFAHREN FÜR GRUPPENBETRIEBSMITTELVERGABE
PROCÉDÉ DE TRAITEMENT POUR UNE ALLOCATION DE RESSOURCES DE GROUPE

(30) Priority: 09.04.2009 CN 200910127885
(43) Date of publication of application: 15.02.2012
(73) Proprietor: ZTE Corporation, Shenzhen, Guangdong 518057 (CN)
(72) Inventor: GUAN, Yanfeng, Shenzhen Guangdong 518057 (CN); XIA, Wei, Shenzhen Guangdong 518057 (CN); LIU, Ying, Shenzhen Guangdong 518057 (CN); QIU, Ping, Shenzhen Guangdong 518057 (CN); FANG, Huiying, Shenzhen Guangdong 518057 (CN)
(74) Representative: Petraz, Gilberto Luigi
(86) International application number: PCT/CN2009/075995
(87) International publication number: WO 2010/115336

(56) References cited:
- EP-A1- 1 903 692
- WO-A1-2009/038982
- CN-A- 101 127 576
- CN-A- 101 394 654
- CN-A- 101 400 134
- US-A1- 2003 063 587
- KDDI: "Category 0 Information for TDM Based Multiplexing of L1/L2 Control Signaling in E-UTRA Downlink", 3GPP DRAFT; R1-071703_CATEGORY0, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. St. Julian; 20070403, 3 April 2007 (2007-04-03), XP050105625, [retrieved on 2007-04-03]

## Description

### Technical Field

The invention relates to the field of communication, and more especially, to a processing method for group resource allocation.

### Background of the Related Art

In wireless communication systems, a base station is a radio transceiver transferring information among users in a particular area. The base station communicates with the users through uplink/downlink, wherein, the downlink is the transmission direction from the base station to the user, and the uplink is the transmission direction from the user to the base station. Multiple users can simultaneously send data to the base station via the uplink and also simultaneously receive data from the base station via the downlink. In addition, relay stations are used between the users and the base stations to relay. In wireless communication systems, the scheduling and allocation of the radio resource are mainly implemented by the base station. For example, the base station provides the downlink resource allocation information when the base station performs downlink transmission and the uplink resource allocation information when the user performs uplink transmission.

In conventional wireless communication systems, the base station allocates resource to each user respectively and separately, and each user has its own resource allocation information. With the increase of the number of users within the cell, for multiple users with the same or similar scheduling demand, the base station sends similar scheduling information to these multiple users, but this also increases the complexity of the base stations performing radio resource scheduling. Moreover, since each user has its own resource allocation information, with the increase of the number of users within the cell, the control overhead generated in the process of the base station allocating and managing the radio resource also increases, thus precious radio resource in the wireless communication system is wasted and the transmission efficiency of the wireless communication system is reduced. For example, dynamic resource allocation method in the IEEE (Institute for Electrical and Electronic Engineers) 802.16e system is: dynamically allocating resource to each user, and indicate the user ID and the resource information in the control message during each allocation. This dynamic allocation method tends to result in excessive control message overhead when the number of users is relatively big. For example, the control overhead of VoIP user occupies about 40% of total downlink resources in the system. The permanent allocation method in the IEEE 802.16e system can reduce the overhead of VoIP service, but the error control mechanism and the hole filling mechanism are relatively complicated, and the permanent resource allocation method is only suitable to periodic traffics with fixed resource size rather than the users using services such as Gaming whose resource size changes relatively big.

To date, with the development of wireless communication network technology, in order to support more users, higher spectrum efficiency and the maximum system capacity, the next generation wireless communication system has adopted many new technologies. For example, in a wireless communication system based on Orthogonal Frequency Division Multiplexing (OFDM) /Orthogonal Frequency Division Multiple Access (OFDMA) technology, the frame structure undergoes great change. The frame structure describes the control structure of the radio resource in time domain, with this structure, the radio resource in the time domain is divided into different level units, such as Superframe, Frame, Subframe and Symbol, and by setting different control channels, such as the Broadcast Control Channel (BCCH), the Unicast Control Channel (UCCH), the scheduling control is achieved.

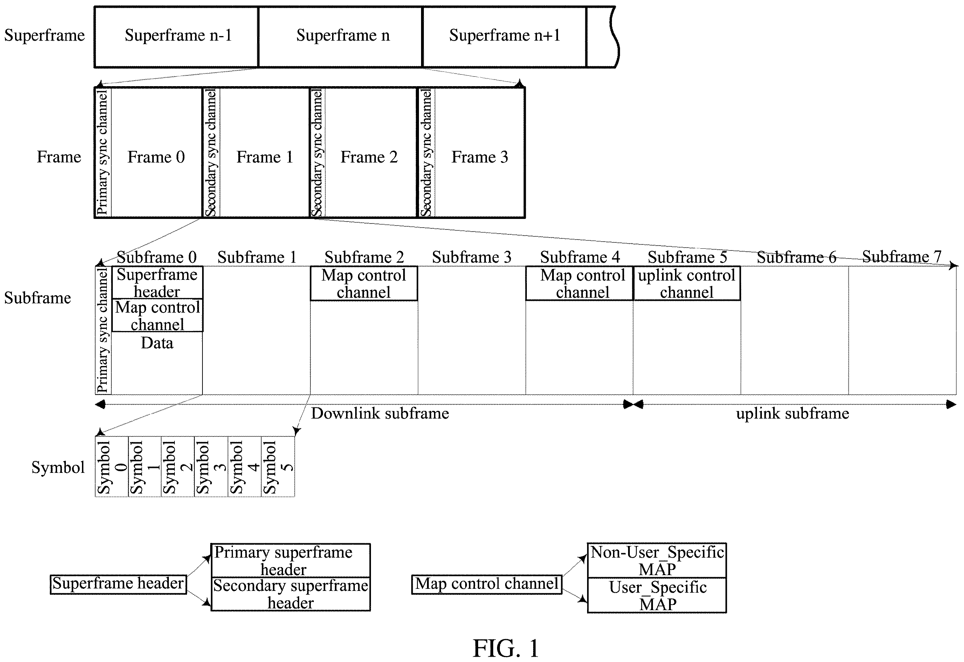

For example, in FIG. 1, the radio resource in the time domain is divided into super frames, each super frame consists of four frames, each frame comprises eight sub-frames, and each sub-frame consists of six basic OFDMA symbols, the practical system can determine the number of OFDMA symbols specifically included in each level unit in the frame structure according to the factors such as the bandwidth that needs to be supported and the cyclic prefix length of the OFDMA symbol. Moreover, a broadcast control channel can be set in the first downlink sub-frame in the super-frame to send system information such as resource mapping, and a unicast control channel is set to send scheduling control information such as resource allocation. Since the BCCH is located at the first sub-frame of the super-frame, it is also known as Superframe Header (SFH), and the SFH can be divided into a Primary Superframe Header (P-SFH) and/or Secondary Superframe Header (S-SFH). Since the unicast control channel is mainly used to send MAP message such as resource allocation, the unicast control channel can also be called the MAP channel, and the MAP information transmitted in the unicast channel can be divided into User-Specific MAP and Non-User-Specific MAP. In addition, the resource scheduling technology might also be different. For the service featured with small data packet, high real-time, and a large number of users, it is very important to make full use of the system resource to reduce the signaling overhead described by the resource allocation, such as VoIP (Voice Over IP), Gaming, and conference video.

In order to achieve the purpose of reducing signaling overhead, when the base station schedules users with the same or similar scheduling requirements (such as, modulation and coding scheme, size of resource occupation, or service type), the base station can use a grouping way to manage uniformly, that is, GRA (Group Resource Allocation). The GRA allocates a certain group resource to the group, and all users within the group share the group resource. The GRA IE (Group Resource Allocation Information element) and the GCIE (Group Configuration Information element) are mainly used to achieve the resource scheduling for one or more users to reduce the complexity of the scheduling by the base station and the control overhead in wireless communication system and to further improve the resource utilization efficiency in the wireless communication system.

Currently, there is no specific solution to provide an effective and complete group resource allocation method in the prior art.

The document WO2009038982 A1 discloses mobile stations grouped by common MCS.

The document US2003063587A1 discloses a mobile communication system capable of increasing communication efficiency and a method therefor are provided, including a receiver for grouping n MCS levels (where n>0) into continuous m MCS level (where n>m>0) according to the quality of a data channel for transmitting an information signal, and sending information on an MCS group using a pilot signal, and an ACK or an NACK signal, which indicates whether the information signal is completely received; and a transmitter for storing information on the n MCS levels, extracting the m MCS levels according to the information on the MCS group transmitted from the receiver, determining one of the extracted m MCS levels as an initial MCS level, modulating and coding information data to be transmitted according to the initial MCS level and transmitting the result to the receiver, and changing the current MCS level in response to the ACK or the NACK signal.

### Summary of the Invention

The object of the present invention is achieved by the features of the appended independent claims.

The present invention is provided since there is no technology to provide an effective and complete group resource allocation method, therefore, the main purpose of the present invention is to provide a processing method for group resource allocation to address the above problem.

In order to solve the abovementioned problem, the technical scheme of the present invention is implemented as:
A processing method of group resource allocation, comprising:
The base station establishes a group according to a modulation and coding scheme and/or resources size;
The modulation and coding scheme and/or resource size supported by the group is static or quasi-static.

The base station establishing a group according to the modulation and coding scheme and/or the resource size comprises: the base station divides multiple modulation and coding schemes supported by itself into one or more sets of modulation and coding schemes, and each group supports one set of modulation and coding schemes.

Each modulation and coding scheme is identified with a binary bit index, and each modulation and coding scheme set is identified with a binary bit ID.

Said division ways comprise at least one of the following:
Sort part or all of said multiple modulation and coding schemes according to modulation scheme and/or coding rate, and select part or all of the sorted modulation and coding schemes as a modulation and coding scheme set;
Sort part or all of said multiple modulation and coding schemes according to modulation scheme and/or coding rate, and select the modulation and coding scheme in turn from the sorted modulation and coding schemes to perform the modulation and coding scheme set division; wherein, the numbers of modulation and coding schemes included in the a plurality of divided modulation and coding scheme sets are the same or different, and the intersections of different modulation and coding scheme sets are all empty sets;
Sort part or all of said multiple modulation and coding schemes according to modulation scheme and/or coding rate, and select the modulation and coding scheme in turn from the sorted modulation and coding schemes to perform the modulation and coding scheme set division; wherein, the numbers of modulation and coding schemes included in the a plurality of divided modulation and coding scheme sets are the same or different, and the intersections of any two different modulation and coding scheme sets are not all empty sets;
Sort part or all of said multiple modulation and coding schemes according to modulation scheme and/or coding rate, and transpose part of adjacent modulation and coding schemes in the sorted modulation and coding schemes, and select the modulation and coding scheme in turn from the transposed modulation and coding schemes to perform the modulation and coding scheme set division, and the transposed modulation and coding schemes belong to different modulation and coding scheme sets; wherein, the numbers of modulation and coding schemes included in the a plurality of divided modulation and coding scheme sets are the same or different, and the intersections of different modulation and coding scheme sets are all empty sets;
The base station further uses a group resource allocation information element and/or a group configuration information element to notify at least one of the following parameters: modulation and coding scheme set, modulation and coding scheme set ID, modulation and coding scheme index, resource size, resource size set, HARQ packet length, and HARQ packet length set.

Said group is used to allocate resource to one or more users.

Said resource size is one or more resources sizes supported by the group.

The modulation and coding scheme and/or resource size of the group being static means: the modulation and coding scheme or modulation and coding scheme set supported by the group is predetermined or fixed; and/or, the resource size or the resource size set supported by the group is predetermined or fixed.

The modulation and coding scheme and/or resource size of the group being quasi-static means: the modulation and coding scheme set or modulation and coding scheme set ID supported by the group is not fixed; or one or more modulation and coding schemes in the modulation and coding scheme set supported by the group are not fixed.

The modulation and coding scheme and/or resource size of the group being quasi-static means: the resource size or the resource size set supported by the group is not fixed; or one or more resource sizes in the resource size set supported by the group are not fixed.

The base station further changes the modulation and coding scheme or the modulation and coding scheme set supported by the group through one of or a combination of: a group configuration information element, a group resource allocation information element, secondary super-frame header.

### The method further comprises:

The base station sends the modulation and coding information corresponding to the group via the secondary super-frame header; wherein, the modulation and coding information comprises at least one of the following: the number of modulation and coding scheme sets, ID of each modulation and coding scheme set, the modulation and coding scheme index included in each modulation and coding scheme set, ID of modulation and coding scheme set supported by each group and/or index of modulation and coding scheme supported by each group, resource size or resource size set supported by each group, the HARQ packet length or the length set supported by each group.

### Said method also comprises:

The base station sends the group resource allocation information element via the A-MAP control channel; wherein the group resource allocation information element comprises at least one of the following: information element type, group ID, modulation and coding set ID, index of each modulation and coding scheme in the modulation and coding scheme set, the number of users newly joining the group, IDs of the users newly joining the group, index of the users newly joining the group in the user bitmap, the number of users exiting the group, and index of the users exiting the group in the user bitmap, moreover, it is used to implement at least one of the following functions: resource allocation of the users within the group, one or more users exiting the group, notifying the ID of the modulation and coding scheme set supported by the group, updating the ID of the modulation and coding scheme set supported by group, notifying the index of the modulation and coding scheme supported by the group, and updating the index of the modulation and coding scheme supported by the group.

### Said method also comprises:

The base station sends the group configuration information element via the A-MAP control channel or the data channel; wherein the group configuration information element comprises at least one of the following: information element type, message type, group ID, modulation and coding scheme set ID, index of each modulation and coding scheme in the modulation and coding scheme set, the number of users newly joining the group, IDs of the users newly joining the group, index of the users newly joining the group in the user bitmap, the number of users exiting the group, and index of the users exiting the group in the user bitmap, multicast ID of the group, moreover, it is used to implement at least one of the following functions: one or more users joining the group, one or more users exiting the group, notifying the ID of the modulation and coding scheme set supported by the group, updating the ID of the modulation and coding scheme set supported by group, notifying the index of the modulation and coding scheme supported by the group, and updating the index of the modulation and coding scheme supported by the group.

The base station sends the group configuration information element via the A-MAP control channel or the data channel, and in the case that said group configuration information element corresponds to one user, the method also comprises:
The base station masks the cyclic redundancy check code in the group configuration information element and the user ID of this user;
The base station sends the group configuration information element via the A-MAP control channel or the data channel, and in the case that said group configuration information element corresponds to multiple users, the method also comprises:
   The base station masks the cyclic redundancy check code in the group configuration information element and the multicast ID of said group, or the base station does not mask the cyclic redundancy check code in the group configuration information element.

Said base station type is one of the following: macro BS, micro BS, Pico BS, and Femto BS; wherein, the ways of group establishment of different BS types are different or same.

The ways of group establishment being different means that at least one of the following parameters is different: the number of modulation and coding scheme sets, ID of each modulation and coding scheme set, index of the modulation and coding scheme included in each modulation and coding set, ID of modulation and coding scheme set supported by each group, index of modulation and coding scheme supported by each group, group size or group size set supported by each group, HARQ packet length or the HARQ packet length set supported by each group. With at least one of the abovementioned technical schemes in the present invention, the group establishment is based on the modulation and coding scheme and/or resource size, and the modulation and coding scheme and/or resource size of the group can be changed, compared with the prior art, the present invention can reduce the complexity of resource allocation method in the wireless communication system and the control overhead and improve the transmission bandwidth utilization of the wireless communication system.

### Brief Description of Drawings

FIG. 1 illustrates the frame structure of the wireless communication system with respect to the related technology;
FIG. 2 is a flow chart of the processing method of group resource allocation in accordance with an embodiment of the present invention;
FIG. 3 is the user bitmap and resource allocation bitmap in the group;
FIG. 4 is an illustration of the modulation and coding scheme set configuration 1 of the group in the macro base station;
FIG. 5 is an illustration of the modulation and coding scheme set configuration 2 of the group in the macro base station;
FIG. 6 is an illustration of the modulation and coding scheme set configuration 3 of the group in the macro base station;
FIG. 7 is an illustration of the modulation and coding scheme set configuration 4 of the group in the macro base station;
FIG. 8 illustrates another configuration example of the modulation and coding scheme set configuration 4 of the group in the macro base station;
FIG. 9 illustrates the modulation and coding scheme set configuration of the group in the Femto base station.

### Preferred Embodiments of the Present Invention

Given that there is no effective and complete group resource allocation method in the prior art, especially in aspects such as the grouping principle and group basic attribute configuration. The existing group resource allocation scheme does not limit the size of user packet in the group, but divides multiple users into different groups mainly according to different traffic types, or a variety of VoIP traffic voice encoder and encoding rate, however, this will increase grouping restriction and management complexity. Based on this, the present invention proposes a grouping way and group configuration way in group resource allocation, in the following, the present invention is described in detail.

It should be noted that, in the case of no conflict, the embodiments in this application and features of the embodiments can be combined. In the following, the present invention will be described in detail with combination of the accompanying figures and embodiments.

According to the embodiments of the present invention, a processing method of group resource allocation is provided.

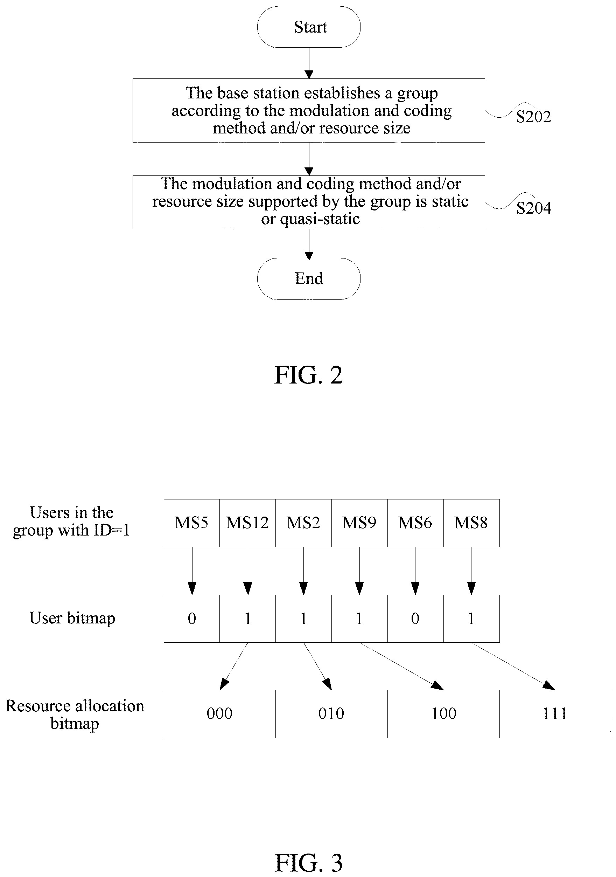

FIG. 2 is a flow chart of the processing method of group resource allocation in accordance with an embodiment of the present invention, as shown in FIG. 2, the method comprises the following steps (S202 to S204).

S202, the base station establishes a group according to the modulation and coding scheme and/or the resource size, wherein, each modulation and coding scheme is identified with a binary bit index, and each modulation and coding scheme set is identified with a binary bit ID.

S204, the modulation and coding scheme and/or the resource size supported by the group is static or quasi-static, that is, the basic station changes the modulation and coding scheme and/or the resource size of the group with quasi-static scheme or static scheme, wherein, the group is used to allocate resource to one or more users, the resource size is one or more resource sizes supported by the group, the modulation and coding scheme of the group being quasi-static means: the modulation and coding scheme set or modulation and coding scheme set ID supported by the group is not fixed; or one or more modulation and coding schemes in the modulation and coding scheme set supported by the group is not fixed. Moreover, the resource size of the group being quasi-static means: the resource size or the resource size set supported by the group is not fixed; or one or more resource sizes in the resource size set supported by the group is not fixed.

Specifically, the base station establishing a group according to the modulation and coding scheme and/or the resource size comprises: the base station divides multiple modulation and coding schemes supported by itself into one or more sets of modulation and coding schemes, and each group supports one set of modulation and coding schemes, moreover, each one of the following four ways can be used to divide the modulation and coding scheme set:
The first way: sort part or all of said multiple modulation and coding schemes according to modulation scheme and/or coding rate, and select part or all of the sorted modulation and coding schemes as a modulation and coding scheme set;
The second way: sort part or all of said multiple modulation and coding schemes according to modulation scheme and/or coding rate, and select the modulation and coding scheme in turn from the sorted modulation and coding schemes to perform the modulation and coding scheme set division; wherein, the numbers of modulation and coding schemes included in the a plurality of divided modulation and coding scheme sets are the same or different, and the intersections of different modulation and coding scheme sets are all empty sets;
The third way: sort part or all of said multiple modulation and coding schemes according to modulation scheme and/or coding rate, and select the modulation and coding scheme in turn from the sorted modulation and coding schemes to perform the modulation and coding scheme set division; wherein, the numbers of modulation and coding schemes included in the a plurality of divided modulation and coding scheme sets are the same or different, and part of the intersections of any two different modulation and coding scheme sets are empty sets;
The fourth way: sort part or all of said multiple modulation and coding schemes according to modulation scheme and/or coding rate, and transpose part of adjacent modulation and coding schemes in the sorted modulation and coding schemes, and select the modulation and coding scheme in turn from the sorted modulation and coding schemes to perform the modulation and coding scheme set division and the transposed modulation and coding schemes belong to different modulation and coding scheme sets; wherein, the numbers of modulation and coding schemes included in the a plurality of divided modulation and coding scheme sets are the same or different, and the intersections of different modulation and coding scheme sets are all empty sets.

In addition, optionally, the base station further changes the modulation and coding scheme or the modulation and coding scheme set supported by the group through one of or a combination of: a group configuration information element, a group resource allocation information element, secondary super-frame header.

The base station sends the modulation and coding information corresponding to the group via the secondary super-frame header; wherein, the modulation and coding information comprises at least one of the following: the number of modulation and coding scheme sets, ID of each modulation and coding scheme set, the modulation and coding scheme index included in each modulation and coding scheme set, ID of modulation and coding scheme set supported by each group and/or index of modulation and coding scheme supported by each group, group size or group size set supported by each group, the HARQ packet length or the length set supported by each group.

In addition, at the same time that or after the base station establishes the group, the base station sends the group resource allocation information element via the A-MAP control channel or data channel; wherein the group resource allocation information element comprises at least one of the following: information element type, message type, group ID, modulation and coding set ID, index of each modulation and coding scheme in the modulation and coding scheme set, the number of users newly joining the group, IDs of the users newly joining the group, index of the users newly joining in the group in the user bitmap, the number of users exiting the group, and index of the users exiting the group in the user bitmap, multicast ID of the group, moreover, it is used to implement at least one of the following functions: one or more users joining the group, one or more users exiting the group, notifying the ID of the modulation and coding scheme set supported by the group, updating the ID of the modulation and coding scheme set supported by group, notifying the index of the modulation and coding scheme supported by the group, and updating the index of the modulation and coding scheme supported by the group. Table 1 provides the field size of the group configuration information element and the corresponding description and also adds function fields for implementing the user exiting the group and joining the group.

At the same time that or after the base station establishes the group, the base station sends the group configuration information element via the A-MAP control channel; wherein the group configuration information element comprises at least one of the following: information element type, group ID, modulation and coding set ID, index of each modulation and coding scheme in the modulation and coding scheme set, the number of users newly joining the group, IDs of the users newly joining the group, index of the users newly joining the group in the user bitmap, the number of users exiting the group, and index of the users exiting the group in the user bitmap, moreover, it is used to implement at least one of the following functions: resource allocation of the users within the group, one or more users exiting the group, notifying the ID of the modulation and coding scheme set supported by the group, updating the ID of the modulation and coding scheme set supported by the group, notifying the index of the modulation and coding scheme supported by the group, and updating the index of the modulation and coding scheme supported by the group. Table 2 provides the field size of the group resource allocation information element and the corresponding description

**Table 1**

| Name | Size (bits) | Description |
|---|---|---|
| Information element type | 4 | Indicate that the control message type is group configuration control information element |
| Exiting group ID | 1 | Indicate whether the group configuration control information element comprises information of the users exiting the group or not |
| Feedback channel index | 4 | Describe the initial index of the group configuration control information element ACK feedback channel or the HARQ feedback channel |
| If the exiting group ID is 1 | | |
| { | | |
| The number of users exited the group | 2 | Indicate the number of users exited the group |
| The number of users exited the group cyclic { | | |
| Position index | 5 | Describe the position index of the users exiting the group in the user bitmap |
| } | | |
| The number of users newly joining in the group | 2 | Indicate the number of users newly joining in the group |
| Group ID | 4 | Indicate the group number |
| MCS set and set ID supported by the group | 4 | Describe the MCS set and the MCS index of the group |
| Resource size set supported by the group | 3 | Describe the packet size set or the packet size range of the group |
| Position index description ID | | Describe whether to describe the position of each newly joining user in the user bitmap or not in turn |
| The number of users newly joining the group cyclic { | | |
| User ID | 16 | |
| If the position index description ID is set as 1 { | | describe the position index of each joining user in the user bitmap in turn if the position index description ID is set as 1, |
| Position index | 5 | |
| } | | |
| If the position index description ID is set as 0 { | | indicate the position index of the first described user if the position index description ID is set as 0, |
| The position index of the first described user | 5 | |
| } | | |
| } | | |
| } | | |
| Byte filling | | The message is filled as integral bytes |
| CRC or masked CRC | 16 | CRC is not masked or CRC is masked with multicast ID |

**Table 2**

| Name | Size (bits) | Description |
|---|---|---|
| Information element type | 4 | Indicate that the control information element type is group resource allocation information element |
| Group resource position information | 6 or 8 | Indicate the size and position of this group resource |
| MCS set ID | 3 | Indicate the modulation and coding scheme set supported by the group |
| User Bitmap length in the group | 5 | Indicate the number of group users |
| User bit Bitmap | Variable | Indicate which users in the group occupy the resource |
| Resource size Bitmap | 4 | Indicate the resource size of each user that needs to occupy resource |
| User MCS index Bitmap | 4 or 5 | Indicate the MSC used by each user that needs to occupy resource |
| HARQ information | variable | Indicate the channel number and retransmission indication of the HARQ used by the group |
| Byte filling | variable | The message is filled as integral bytes |
| masked CRC | 16 | CRC is masked with group ID |

As shown in Table 2, in order to further reduce the overhead, the resource size Bitmap and the user MCS index Bitmap can be combined to reduce the overhead. For example, the modulation and coding scheme set supported by Group 1 is {QPSK, 31/256, QPSK, 48/256, QPSK, 71/256, QPSK, 101/256, QPSK, 135/256}, the resource size set or the HARQ packet length set supported by Group 1 is {30, 40, 60, 80, 100, 120}, and it indicates that the MCS index needs 3 bits, the resource size or HARQ packet length needs 3 bits. However, if the resource size or the HARQ packet length is 30, the 31/256 of QPSK is preferably applied to transmit (in this case the transmission is relatively stable), and one of the following modulation schemes is taken as an alternative transmission scheme, that is, without priority to choose one of the following transmission scheme: 48/256 of QPSK, 71/256 of QPSK, 101/256 of QPSK, 135/256 of QPSK. Then, the only remained is the combination of modulation and coding scheme (the preferred transmission scheme) and the resource size or the HARQ packet length, each combination can be indicated with a binary bit. For example, the remained combination can be one of the following six combinations: {(30, QPSK, 31/256), (40, QPSK, 48/256), (60, QPSK, 71/256), (80, QPSK, 101/256), (100, QPSK, 101/256), (120, QPSK, 135/256)}, each combination only needs three bits, compared to the prior art, it reduces the overhead.

In the specific communication process, the base station sends the group configuration information element to the terminal via the A-MAP control channel or data channel, if the group configuration information element corresponds to a user, the base station masks the cyclic redundancy check code of the group configuration information element and the user ID of this user; if the group configuration information element corresponds to multiple users, the base station masks the cyclic redundancy check code of the group configuration information element and the group multicast ID, or the base station does not mask the cyclic redundancy check code of the group configuration information element.

In addition, the base station can send at least one of the following parameters to the terminal via the group resource allocation information element and/or group configuration information element: modulation and coding scheme set, modulation and coding scheme set ID, modulation and coding scheme index.

In addition, the base station can indicate the index of the modulation and coding scheme supported by the group via the group configuration information element and/or the secondary broadcast control channel.

Wherein, the base station type is one of the following: macro BS, micro BS, Pico BS, and Femto BS; wherein, the ways of group establishment of different BS types are different or same, wherein, the ways of group establishment being different means that at least one of the following parameters is different: the number of modulation and coding scheme sets, ID of each modulation and coding scheme set, index of the modulation and coding scheme included in each modulation and coding set, ID of modulation and coding scheme set supported by each group, index of modulation and coding scheme supported by each group, group size or group size set supported by each group, HARQ packet length or the HARQ packet length set supported by each group.

With the technical schemes provided in the embodiments of the present invention, the group establishment is based on the modulation and coding scheme and/or resource size, and the modulation and coding scheme and/or resource size of the group can be changed, thus it can reduce the complexity of resource allocation method in the wireless communication system and the control overhead and improve the transmission bandwidth utilization of the wireless communication system.

FIG. 3 describes the user bitmap and the resource allocation bitmap in the group, as shown in FIG. 3, the group with ID = 1 (to simplify the description, the group is called Group 1) calling multiple users is taken as example to illustrate, and in the specific implementation process, each group supports multiple MCSs, if the user's current channel condition satisfies one of the a plurality of MCSs supported by a certain group (for example, Group 1), and/or a packet length sent and/or received by the user satisfies the packet length supported by a certain group (for example, Group 1), then the Group 1 can schedule the user. As shown in FIG. 3, all the current channel conditions of MS5, MS12, MS2, MS9, MS6 and MS8 satisfy one of multiple MCSs supported by the Group 1, then there is a one-by-one corresponding relationship between the users and the user bitmaps, the user bitmap corresponding to MS5 is 0, the user bitmap corresponding to MS12 is 1, the user bitmap corresponding to MS2 is 1, the user bitmap corresponding to MS9 is 1, the user bitmap corresponding to MS6 is 0, and the user bitmap corresponding to MS8 is 1, wherein, the resource allocation bitmap corresponding to MS12 is 000, the resource allocation bitmap corresponding to MS2 is 010, the resource allocation bitmap corresponding to MS9 is 100, and the resource allocation bitmap corresponding to MS8 is 111.

Table 3 shows an example of the modulation and coding scheme supported by a macro base station, for example, the macro base station supports up to 16 modulation and coding schemes, and the coding schemes are CTC (Convolution Turbo Code), as specified in Table 3.

**Table 3**

| Modulation and coding scheme index | Modulation scheme | Coding rate |
|---|---|---|
| 0000 | QPSK | 31/256 |
| 0001 | QPSK | 48/256 |
| 0010 | QPSK | 71/256 |
| 0011 | QPSK | 101/256 |
| 0100 | QPSK | 135/256 |
| 0101 | QPSK | 171/256 |
| 0110 | 16QAM | 102/256 |
| 0111 | 16QAM | 128/256 |
| 1000 | 16QAM | 155/256 |
| 1001 | 16QAM | 184/256 |
| 1010 | 64QAM | 135/256 |
| 1011 | 64QAM | 157/256 |
| 1100 | 64QAM | 181/256 |
| 1101 | 64QAM | 205/256 |
| 1110 | 64QAM | 225/256 |
| 1111 | 64QAM | 237/256 |

As shown in Table 3, C = 16. If c = 16, that is, all the modulation and coding schemes supported by the macro base station can be used for group resource allocation. The modulation and coding schemes comprises modulation schemes, coding schemes and coding rates, and the modulation schemes, the coding schemes and the coding rates correspond to the modulation and coding indexes one-by-one, for example, when modulation scheme is 64QAM, the corresponding coding rate is 225/256, and the index is 1110.

According to the multiple modulation and coding schemes shown in Table 3, the following examples can be used to produce or set the modulation and coding scheme set supported by the group resource allocation in the macro base station.

### The first example

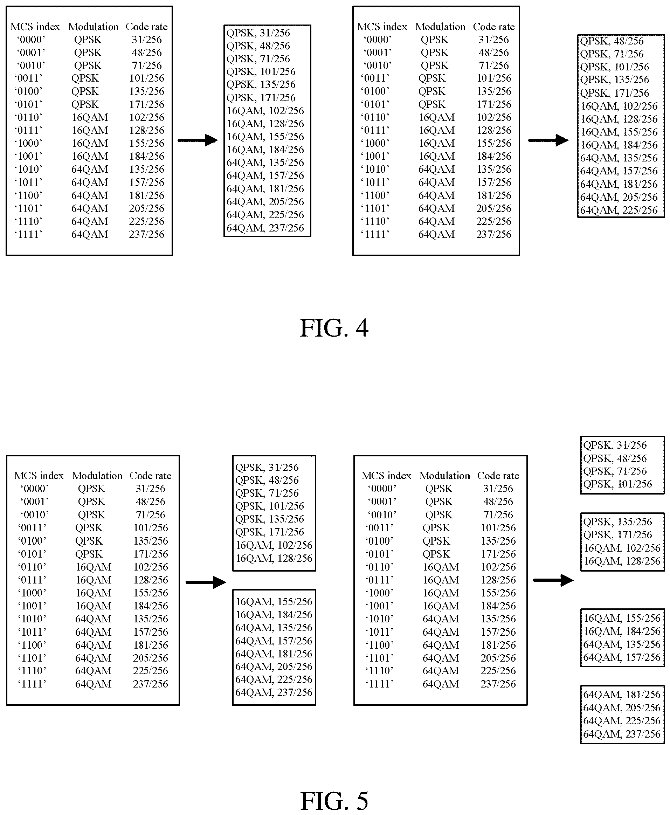

This example describes sorting part or all of said multiple modulation and coding schemes according to modulation scheme and/or coding rate, and selecting part or all of the sorted modulation and coding schemes as a modulation and coding scheme set. Specifically, suppose the base station supports a total of C modulation and coding schemes, and select c modulation and coding schemes from the C modulation and coding schemes, and further sort the c modulation and coding schemes, afterwards, select and group some or all of the c modulation and coding schemes into a modulation and coding scheme set, where C is greater than or equal to c, and both C and c are natural numbers. FIG. 4 illustrates the modulation and coding scheme set configuration 1 of the group in a macro base station, as shown in FIG. 4, when c = 16, that is, Sc = {QPSK, 31/256, QPSK, 48/256, QPSK, 71/256, QPSK, 101/256, QPSK, 135/256, QPSK, 171/256, 16QAM, 102/256, 16QAM, 128/256, 16QAM, 155/256, 16QAM, 184/256, 64QAM, 135/256, 64QAM , 157/256, 64QAM, 181/256, 64QAM, 205/256, 64QAM, 225/256, 64QAM, 237/256}. When c = 14, Sc = 14 = {QPSK, 48/256, QPSK, 71/256, QPSK, 101/256, QPSK, 135/256, QPSK, 171/256, 16QAM, 102/256, 16QAM, 128 / 256, 16QAM, 155/256, 16QAM, 184/256, 64QAM, 135/256, 64QAM, 157/256, 64QAM, 181/256, 64QAM, 205/256, 64QAM, 225/256}.

### The second example

This example describes sorting part or all of said multiple modulation and coding schemes according to modulation scheme and/or coding rate, and selecting the modulation and coding scheme in turn from the sorted modulation and coding schemes to perform the modulation and coding scheme set division; wherein, the numbers of modulation and coding schemes included in the a plurality of divided modulation and coding scheme sets are same or different, and the intersections of different modulation and coding scheme sets are all empty sets. That is to say, suppose the base station supports a total of C modulation and coding schemes, and select c modulation and coding schemes from the C modulation and coding schemes, and further select c modulation and coding schemes according to the order from low coding rate to high coding rate, and in turn from the sorted modulation and coding schemes, select modulation and coding schemes to perform modulation and coding scheme set division, wherein, the numbers of modulation and coding schemes in the divided multiple modulation and coding sets might be the same or different, and the intersections between different modulation and coding sets are empty sets. For example, the first cl modulation and coding schemes compose a modulation and coding set Scl, the following c2 modulation and coding schemes compose a modulation and coding set Sc2, and so on, and the last ck modulation and coding schemes compose a modulation and coding set Sck, where cl + c2 +...+ ck = c, and the intersection between Sci and Scj is an empty set.

FIG. 5 is illustrates the modulation and coding scheme set configuration 2 of the group in a macro base station. k = 2 or 4, that is, 2 or 4 modulation and coding scheme sets for group resource allocation is configured according to the c modulation and coding schemes:
When k = 2, that is, the modulation and coding schemes are divided into two modulation and coding scheme sets: Scl and Sc2, where, Scl = {QPSK, 31/256, QPSK, 48/256, QPSK, 71/256, QPSK, 101/256, QPSK, 135 / 256, QPSK, 171/256, 16QAM, 102/256, 16QAM, 128/256}, and Sc2 = {16QAM, 155/256, 16QAM, 184/256, 64QAM, 135/256, 64QAM, 157/256, 64QAM, 181/256, 64QAM, 205/256, 64QAM, 225/256, 64QAM, 237/256}, the intersection between Scl and Sc2 is an empty set, that is, the modulation and coding schemes are different.

When k = 4, that is, the modulation and coding schemes are divided into four modulation and coding scheme sets: Scl, Sc2, Sc3 and Sc4, where, Scl = {QPSK, 31/256, QPSK, 48/256, QPSK, 71/256, QPSK, 101/256}, Sc2 = {QPSK, 135/256, QPSK, 171/256, 16QAM, 102/256, 16QAM, 128/256}, Sc3 = {16QAM, 155/256, 16QAM, 184/256, 64QAM, 135/256, 64QAM, 157/256}, Sc4 = {64QAM, 181/256, 64QAM, 205/256, 64QAM, 225/256, 64QAM, 237/256}, the intersection between any two of modulation and coding scheme sets is an empty set, that is, the modulation and coding schemes are different.

No matter k = 2 or 4, for i = j - 1, the modulation order of the modulation and coding schemes in Sci is not higher than that in Scj, or the coding rate in the Sci is not higher than that in Scj when the modulation schemes are the same.

### The third example

This example describes sorting part or all of said multiple modulation and coding schemes according to modulation scheme and/or coding rate, transposing part of adjacent modulation and coding schemes in the sorted modulation and coding schemes, and selecting the modulation and coding scheme in turn from the transposed modulation and coding schemes to perform the modulation and coding scheme set division, and the transposed modulation and coding schemes belong to different modulation and coding scheme sets; wherein, the numbers of modulation and coding schemes included in the a plurality of divided modulation and coding scheme sets are same or different, and the intersections of different modulation and coding scheme sets are all empty sets. That is to say, suppose the base station supports a total of C modulation and coding schemes, and select c modulation and coding schemes from the C modulation and coding schemes, and further select c modulation and coding schemes according to the order from low coding rate to high coding rate, transpose part of the adjacent modulation and coding schemes in the ordered multiple modulation and coding schemes, and from the transposed modulation and coding schemes, select modulation and coding schemes to perform modulation and coding scheme set division, wherein, the numbers of modulation and coding schemes in the divided multiple modulation and coding sets might be the same or different, and each divided modulation and coding scheme set comprises part of transposed modulation and coding schemes, the intersections between different modulation and coding sets are empty sets. For example, the first cl modulation and coding schemes compose a modulation and coding set Scl, the following c2 modulation and coding schemes compose a modulation and coding set Sc2, and so on, and the last ck modulation and coding schemes compose a modulation and coding set Sck, for i<j, the modulation order of the modulation and coding schemes in Sci might be higher than that in Scj, or the coding rate in the Sci might be higher than that in Scj when the modulation schemes are the same, where cl + c2 +...+ ck = c, and the intersection between Sci and Scj is an empty set.

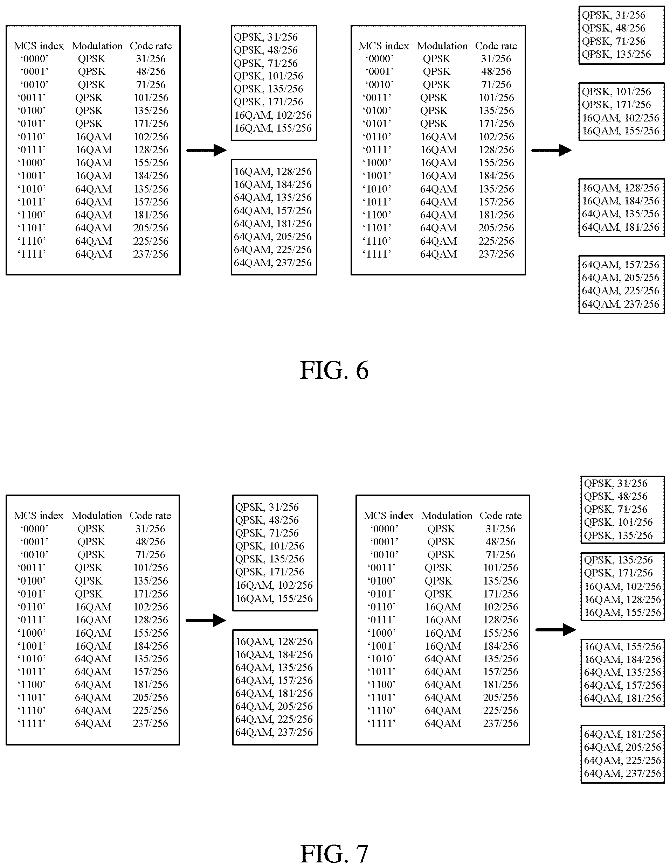

FIG. 6 is illustrates the modulation and coding scheme set configuration 3 of the group in a macro base station. k = 2 or 4, that is, 2 or 4 modulation and coding scheme sets for group resource allocation is configured according to the c modulation and coding schemes:
When k = 2, that is, the modulation and coding schemes are divided into two modulation and coding scheme sets: Scl and Sc2, where Scl = {QPSK, 31/256, QPSK, 48/256, QPSK, 71/256, QPSK, 101/256, QPSK, 135 / 256, QPSK, 171/256, 16QAM, 102/256, 16QAM, 155/256}, Sc2 = {16QAM, 128/256, 16QAM, 184/256, 64QAM, 135/256, 64QAM, 157/256, 64QAM , 181/256, 64QAM, 205/256, 64QAM, 225/256, 64QAM, 237/256}, the intersection between Scl and Sc2 is an empty set, that is, the modulation and coding schemes are different. However, the modulation order of the modulation and coding schemes in Sc1 might be higher than that in Sc2, or the coding rate in the Sc1 is not higher than that in Sc2 when the modulation schemes are the same, for example, the coding rate of the 16QAM, 155/256 in Sc1 is higher than that of the 16QAM, 128/256 in Sc2.

When k = 4, that is, the modulation and coding schemes are divided into four modulation and coding scheme sets: Scl, Sc2, Sc3 and Sc4, where, Scl = {QPSK, 31/256, QPSK, 48/256, QPSK, 71/256, QPSK, 135/256}, Sc2 = {QPSK, 101/256, QPSK, 171/256, 16QAM, 102/256, 16QAM, 155/256}, Sc3 = {16QAM, 128/256, 16QAM, 184/256, 64QAM, 135/256 , 64QAM, 181/256}, Sc4 = {64QAM, 157/256, 64QAM, 205/256, 64QAM, 225/256, 64QAM, 237/256}, the intersection between any two of modulation and coding scheme sets is an empty set, that is, the modulation and coding schemes are different.

Compared with the second example, with this example, when k = 2, the modulation order of the modulation and coding schemes in the modulation and coding set Scl, Sc2, Sc3 and Sc4 is higher and/or the difference between the maximum coding rate and the minimum coding rate is larger, for example, in the second example, the minimum coding rate of Scl is 31/256 and the maximum coding rate is 101/256, while in this example, the minimum coding rate of Scl is 31/256 and the maximum coding rate is 135/256, therefore a group can support a larger packet length range, which allows the channel condition change range of the users within the group larger. However, when the numbers of modulation and coding schemes in each modulation and coding scheme set are the same, that is, when the indication overheads are the same, it is able to reduce the frequency of the group users joining and/or exiting the group, thereby reduce the management overhead and scheduling complexity. The case when k = 4 is the same as the case when k = 2, thus the process is not repeated here.

### The fourth example

This example describes sorting part or all of said multiple modulation and coding schemes according to modulation scheme and/or coding rate, and selecting the modulation and coding scheme in turn from the sorted modulation and coding schemes to perform the modulation and coding scheme set division; wherein, the numbers of modulation and coding schemes included in the a plurality of divided modulation and coding scheme sets are same or different, and part of the intersections of different modulation and coding scheme sets are empty sets. That is to say, suppose the base station supports a total of C modulation and coding schemes, and select c modulation and coding schemes from the C modulation and coding schemes, and further select c modulation and coding schemes according to the order from low coding rate to high coding rate, and in turn from the sorted modulation and coding schemes, select modulation and coding schemes to perform modulation and coding scheme set division, wherein, the numbers of modulation and coding schemes in the divided multiple modulation and coding sets might be the same or different, and part of the intersections between different modulation and coding sets are not empty sets. For example, the first cl modulation and coding schemes compose a modulation and coding set Scl, the following c2 modulation and coding schemes compose a modulation and coding set Sc2, and so on, and the last ck modulation and coding schemes compose a modulation and coding set Sck, Sck comprises one or more modulation and coding schemes in Sck-1, where cl + c2 +...+ ck > c, and i does not equal j, therefore, the intersection between Sci and Scj is not an empty set.

FIG. 7 illustrates the modulation and coding scheme set configuration 4 of the group in a macro base station. k = 2 or 4, that is, 2 or 4 modulation and coding scheme sets for group resource allocation is configured according to the c modulation and coding schemes:
When k = 2, that is, the modulation and coding schemes are divided into two modulation and coding scheme sets: Scl and Sc2, where Scl = {QPSK, 31/256, QPSK, 48/256, QPSK, 71/256, QPSK, 101/256, QPSK, 135 / 256, QPSK, 171/256, 16QAM, 102/256, 16QAM, 128/256, 16QAM, 155/256}, Sc2 = {16QAM, 128/256, 16QAM, 155/256, 16QAM, 184/256, 64QAM, 135/256, 64QAM, 157/256, 64QAM, 181/256, 64QAM, 205/256, 64QAM, 225/256, 64QAM, 237/256}. The intersection between cl and c2 is {16QAM, 128/256, 16QAM, 155/256} rather than an empty set, and cl is 9, so as c2, cl + c2 = 18, greater than c = 16.

When k = 4, that is, the modulation and coding schemes are divided into four modulation and coding scheme sets: Scl, Sc2, Sc3 and Sc4, where, Scl = {QPSK, 31/256, QPSK, 48/256, QPSK, 71/256, QPSK, 101/256, QPSK, 135/256}, Sc2 = {QPSK, 135/256, QPSK, 171/256, 16QAM , 102/256, 16QAM, 128/256, 16QAM, 155/256}, {Sc3 = 16QAM, 155/256, 16QAM, 184/256, 64QAM, 135/256, 64QAM, 157/256, 64QAM, 181/256 }, Sc4 = {64QAM, 181/256, 64QAM, 205/256, 64QAM, 225/256, 64QAM, 237/256}. The intersection between Scl and Sc2 is {QPSK, 135/256} rather than an empty set, similar, the intersection between Sc2 and Sc3 is {16QAM, 155/256} and the intersection between Sc3 and Sc4 is {64QAM, 181/256}. cl is 5, c2 is 5, c3 is 5, while c4 is 4, and then cl + c2 + c3 + c4 = 19, greater than c = 16.

Compared with the second example, with this example, when k = 2, the intersection between the adjacent modulation and coding scheme sets in the fourth example is not an empty set, which makes some groups (especially two groups whose modulation and coding schemes are adjacent) contain the same modulation and coding schemes, that is, make some groups having the same modulation and coding schemes, thereby reducing the movement of the users between groups and reducing management overhead and scheduling complexity. For example, if the modulation and coding scheme set supported by the Group 1 is Scl, and the modulation and coding scheme set supported by the Group 2 is Sc2, when the user u of the Group 1 is suitable to apply a higher order modulation and coding scheme (for example, QPSK, 135/256) since the channel condition becomes better, the user u does not need to exit the Group 1, then join the Group 2, if the method shown in the second example is applied, the user u needs to exit the Group 1, and then join the Group 2, it can be seen that, compared with the second example, with the method shown in the fourth example, the overhead of group resource management can be reduced.

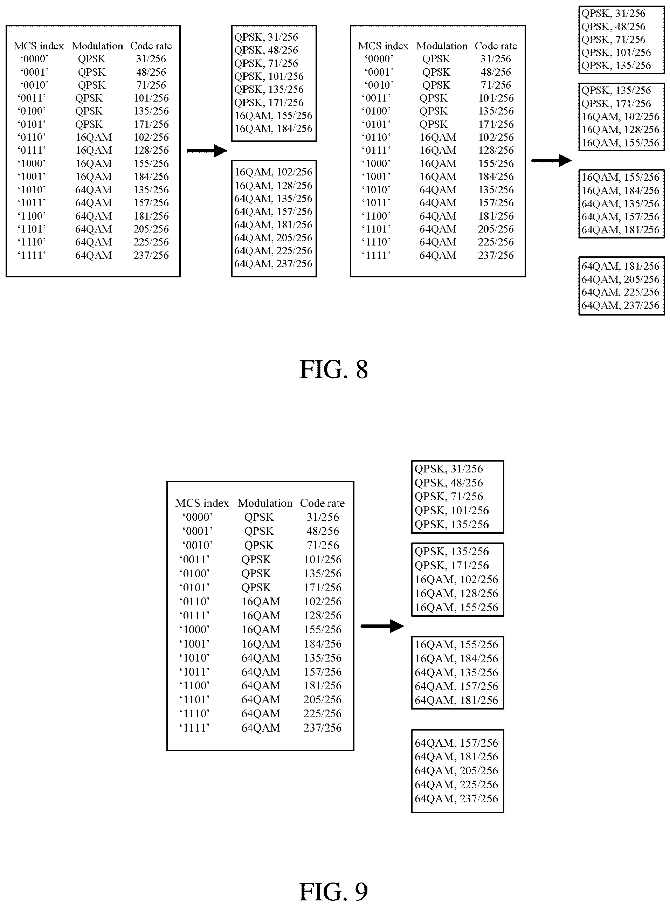

Similar to FIG. 7, the modulation and coding scheme sets of the groups in the macro base station can also apply the configuration method shown in FIG. 8.

It should be noted that, the modulation and coding scheme sets supported by the group resource allocation in a base station might be one of or a combination of the modulation and coding scheme sets generated with any one of the above first example to the fourth example. For example, the modulation and coding scheme set Sc in the first example, the modulation and coding scheme sets Sc1 and Sc2 in the second example when k = 2, the modulation and coding scheme sets Scl, Sc2, Sc3 and Sc4 in the second example when k = 4, these seven modulation and coding schemes can be used to support the group resource allocation, the modulation and coding scheme set IDs corresponding to these seven modulation and coding scheme sets are: 000, 001, 010, 011, 100, 101, 110, that is, the modulation and coding set ID corresponding to the modulation and coding scheme set Sc is 000, and so on. For example, the modulation and coding scheme set Sc in the first example, the modulation and coding scheme sets Sc1 and Sc2 in the second example when k = 2, the modulation and coding scheme sets Scl, Sc2, Sc3 and Sc4 in the second example when k = 4, these seven modulation and coding scheme sets are used to support the group resource allocation. Each group can select one modulation and coding scheme as the modulation and coding scheme set supported by the group.

Moreover, the k values in the abovementioned methods are not limited to 2 or 4, in theory, k can take any positive integer less than or equal to c, that is 0 <k <= c, ci, 0 <i <= k, the values of ci are not limited to 16, 3, and 5, in theory, it can take any positive integer less than or equal to c. For example, in the third example, when k = 3, the modulation and coding schemes are divided into three modulation and coding scheme sets: Scl, Sc2 and Sc3, where, Scl = {QPSK, 31/256, QPSK, 48/256, QPSK, 71/256, QPSK, 101/256, QPSK, 171/256}, Sc2 = {QPSK, 135/256, 16QAM, 102/256, 16QAM, 128/256, 16QAM, 155/256, 64QAM, 135/256}, Sc3 = {16QAM, 184/256, 64QAM, 157/256, 64QAM, 181/256, 64QAM, 205/256, 64QAM, 225/256, 64QAM, 237/256}.

It should be noted that, the modulation order means the number of binary bits that can be transmitted in one symbol in one modulation scheme, For example, in QPSK, 16QAM and 64QAM, the modulation order (being 2) of QPSK is the lowest, the modulation order of 16QAM is 4, and the modulation order (being 6) of 64QAM is the highest. In addition, according to the order of coding rate from low to high in accordance with the abovementioned examples means: first, arrange the modulation orders (or the modulation schemes) in the ascending order, and for the same modulation order (or modulation scheme), code rate is also arranged in ascending order, vice versa. In the implementation process, the coding rates can be arranged in descending order, specifically, the modulation orders (or modulation schemes) can be arranged in descending order, so as the encoding rates for the same modulation order (or modulation scheme).

Different types of base stations use the same modulation and coding scheme set, for example, Macro BS, Micro BS, Pico BS, and Femto BS take the six modulation and coding scheme sets in the third or fourth example when k = 2 and k = 4 as a modulation and coding scheme set of the group allocation supported by one base station, as shown in FIG. 6 or 7, each modulation and coding scheme set is identified with one modulation and coding scheme set ID, each group can select one modulation and coding scheme set as the modulation and coding scheme set supported by the group.

Different types of base stations apply different modulation and coding scheme sets, for example, Macro BS and/or Micro BS and/or Pico BS apply the modulation and coding scheme set Sc in the first example and the six modulation and coding scheme sets in the second example when k = 2 and k = 4, a total of these seven modulation and coding scheme sets as the modulation and coding scheme sets of the group allocation supported by the Macro BS and/or Micro BS and/or Pico BS, as shown in FIGs. 4 and 5, while the Femto BS only applies the four modulation and coding scheme sets in the second method when k = 4, or the four modulation and coding scheme sets in the third example when k=4, or the four modulation and coding scheme sets in FIG. 9, as the modulation and coding scheme sets of the group allocation supported by one Femto BS. Moreover, four types of base stations can also use modulation and coding scheme sets different from each other.

As mentioned above, with a processing method of group resource allocation provided in the present invention, the group establishment is based on the modulation and coding scheme and/or resource size, and the modulation and coding scheme and/or resource size of the group can be changed, thus the present invention can reduce the complexity of resource allocation method in the wireless communication system and the control overhead, and improve the transmission bandwidth utilization of the wireless communication system.

The above description is only a preferred embodiment rather than a restriction of the present invention, and for those skilled in the field, various modifications and improvements can be included.

## Claims

1. A processing method of group resource allocation, comprising:
a base station establishing a group according to a modulation and coding scheme and/or resources size (S202), wherein, said group is used to allocate resource to one or more users and said resource size is one or more resources sizes supported by the group;
the modulation and coding scheme and/or resource size supported by the group being static or quasi-static (S204);
**characterized in that** each modulation and coding scheme is identified with a binary bit index, and each modulation and coding scheme set is identified with a binary bit identifier; the base station further uses a group resource allocation information element and/or a group configuration information element to notify at least one of the following parameters: modulation and coding scheme set, modulation and coding scheme set identifier, modulation and coding scheme index, resource size, resource size set, hybrid automatic repeat request packet length, and hybrid automatic repeat request packet length set;
the base station establishing a group according to the modulation and coding scheme and/or the resource size comprises: the base station divides a plurality of modulation and coding schemes supported by itself into one or more sets of modulation and coding schemes, with each group supporting one set of modulation and coding schemes;
wherein, ways of division comprise at least one of the following:
sorting part or all of said plurality of modulation and coding schemes according to modulation scheme and coding rate, and selecting part or all of the sorted modulation and coding schemes as a modulation and coding scheme set;
sorting part or all of said plurality of modulation and coding schemes according to modulation scheme and coding rate, and selecting the modulation and coding scheme in turn from the sorted modulation and coding schemes to perform the modulation and coding scheme set division; wherein, numbers of the modulation and coding schemes included in the plurality of divided modulation and coding scheme sets are same or different, and the intersections of different modulation and coding scheme sets are all empty sets;
sorting part or all of said plurality of modulation and coding schemes according to modulation scheme and coding rate, and selecting the modulation and coding scheme in turn from the sorted modulation and coding schemes to perform the modulation and coding scheme set division; wherein, the numbers of modulation and coding schemes included in the plurality of divided modulation and coding scheme sets are same or different, and the intersections of any two different modulation and coding scheme sets are not all empty sets;
sorting part or all of said plurality of modulation and coding schemes according to modulation scheme and coding rate, transposing part of adjacent modulation and coding schemes in the plurality of sorted modulation and coding schemes, and selecting the modulation and coding scheme in turn from the plurality of transposed modulation and coding schemes to perform the modulation and coding scheme set division, and the transposed modulation and coding schemes belong to different modulation and coding scheme sets; wherein, the numbers of modulation and coding schemes included in the plurality of divided modulation and coding scheme sets are same or different, and the intersections of different modulation and coding scheme sets are all empty sets.

2. The method of claim 1, wherein, the modulation and coding scheme and/or resource size of the group being static means the modulation and coding scheme or modulation and coding scheme set supported by the group is predetermined or fixed; and/or, the resource size or the resource size set supported by the group is predetermined or fixed while the modulation and coding scheme and/or resource size of the group being quasi-static means the modulation and coding scheme set or modulation and coding scheme set identifier supported by the group is not fixed; or one or more modulation and coding schemes in the modulation and coding scheme set supported by the group is not fixed.

3. The method of claim 1, wherein, the modulation and coding scheme and/or resource size of the group being quasi-static means: the resource size or the resource size set supported by the group is not fixed; or one or more resource sizes in the resource size set supported by the group is not fixed.

4. The method of either of claim 1 and claim 3, wherein, the base station further changes the modulation and coding scheme or the modulation and coding scheme set supported by the group through one of or a combination of: a group configuration information element, a group resource allocation information element, a secondary super-frame header.

5. The method of claim 1, wherein, the method further comprises:
the base station sending modulation and coding information corresponding to the group via the secondary super-frame header; wherein, the modulation and coding information comprises at least one of the following: the number of modulation and coding scheme sets, the identifier of each modulation and coding scheme set, the modulation and coding scheme index included in each modulation and coding scheme set, the identifier of modulation and coding scheme set supported by each group and/or the index of modulation and coding scheme supported by each group, group size or group size set supported by each group, the hybrid automatic repeat request packet length or the length set supported by each group.

6. The method of claim 1, wherein, said method also comprises:
the base station sending the group resource allocation information element via A-MAP control channel; wherein the group resource allocation information element comprises at least one of the following: information element type, group identifier, modulation and coding set identifier, index of each modulation and coding scheme in the modulation and coding scheme set, the number of users newly joining the group, identifiers of the users newly joining the group, index of the users newly added in the group in user bitmap, the number of users exiting the group, and index of the users exiting the group in the user bitmap, moreover, the group resource allocation information element is used to implement at least one of the following functions: resource allocation of the users within the group, one or more users exiting the group, notifying the identifier of the modulation and coding scheme set supported by the group, updating the identifier of the modulation and coding scheme set supported by group, notifying the index of the modulation and coding scheme supported by the group, and updating the index of the modulation and coding scheme supported by the group.

7. The method of claim 1, wherein, said method also comprises:
the base station sending the group configuration information element via the A-MAP control channel or data channel; wherein the group configuration information element comprises at least one of the following: information element type, message type, group identifier, modulation and coding set identifier, index of each modulation and coding scheme in the modulation and coding scheme set, the number of users newly joining the group, identifiers of the users newly joining the group, index of the users newly added in the group in the user bitmap, the number of users exiting the group, and index of the users exiting the group in the user bitmap, multicast identifier of the group, moreover, the group configuration information element is used to implement at least one of the following functions: one or more users joining the group, one or more users exiting the group, notifying the identifier of the modulation and coding scheme set supported by the group, updating the identifier of the modulation and coding scheme set supported by group, notifying the index of the modulation and coding scheme supported by the group, and updating the index of the modulation and coding scheme supported by the group.

8. The method of claim 7, wherein, the base station sends the group configuration information element via the A-MAP control channel or the data channel, and in case that said group configuration information element corresponds to one user, the method also comprises:
the base station masking cyclic redundancy check codes in the group configuration information element and the user identifier of this user;
the base station sending the group configuration information element via the A-MAP control channel or the data channel, and in case that said group configuration information element corresponds to a plurality of users, the method also comprises:
the base station masking the cyclic redundancy check codes in the group configuration information element and the multicast identifier of the group, or the base station not masking the cyclic redundancy check codes in the group configuration information element.

9. The method of claim 1, wherein, said base station's type is one of the following: macro base station, micro base station, Pico base station, and Femto base station; wherein, ways of group establishment of different BS types are different or same.

10. The method of claim 9, wherein, said ways of group establishment being different means that at least one of the following different parameters is different: the number of modulation and coding scheme sets, the identifier of each modulation and coding scheme set, the index of the modulation and coding scheme included in each modulation and coding set, the identifier of the modulation and coding scheme set supported by each group, the index of the modulation and coding scheme supported by each group, the group size or group size set supported by each group, the hybrid automatic repeat request packet length or the hybrid automatic repeat request packet length set supported by each group.

## Patentansprüche

1. Verarbeitungsverfahren zur Gruppenressourcenzuweisung, wobei das Verfahren umfasst:
eine Basisstation, welche eine Gruppe gemäß einem Modulations- und Kodierungsschema und/oder einer Ressourcengröße einrichtet (S202), wobei die Gruppe verwendet wird, um Ressourcen einem oder mehreren Nutzern zuzuweisen und wobei die Ressourcengröße eine oder mehrere Ressourcengrößen ist, welche von der Gruppe unterstützt wird;
wobei das Modulations- und Kodierungsschema und/oder die Ressourcengröße, welche von der Gruppe unterstützt wird, statisch oder quasi-statisch ist (S204);
wobei das Verfahren **dadurch gekennzeichnet ist, dass** jedes Modulations- und Kodierungsschema mit einem binären Bit-Index identifiziert wird und jede Menge von Modulations- und Kodierungsschemata mit einer binären Bit-Kennung identifiziert wird; wobei die Basisstation ferner ein Gruppenressourcenzuweisung-Informationselement und/oder ein Gruppenkonfiguration-Informationselement nutzt, um mindestens einen der folgenden Parameter anzuzeigen: Menge von Modulations- und Kodierungsschemata, Kennung einer Menge von Modulations- und Kodierungsschemata, Index eines Modulations- und Kodierungsschema, Ressourcengröße, Menge von Ressourcengrößen, Paketlänge einer hybriden automatischen Wiederholungsanfrage, und Paketlängen-Menge von hybriden automatischen Wiederholungsanfragen,
wobei das Einrichten einer Gruppe gemäß dem Modulations- und Kodierungsschema und/oder der Ressourcengröße durch die Basisstation umfasst, dass die Basisstation eine Mehrzahl von Modulations- und Kodierungsschemata, welche von ihr unterstützt werden, in eine oder mehrere Mengen von Modulations- und Kodierungsschemata aufteilt, wobei jede Gruppe eine Menge von Modulations- und Kodierungsschemata unterstützt;
wobei ein Verfahren zur Aufteilung mindestens einen der folgenden Schritte umfasst: Ordnen eines Teils oder der Gesamtheit der Mehrzahl von Modulations- und Kodierungsschemata gemäß einer Modulationsschema- und Kodierungs-Rate und Auswählen eines Teils oder der Gesamtheit der sortierten Modulations- und Kodierungsschemata als eine Menge von Modulations- und Kodierungsschemata;
Ordnen eines Teils oder der Gesamtheit der Mehrzahl von Modulations- und Kodierungsschemata gemäß einer Modulationsschema- und Kodierungs-Rate, und Auswählen des Modulations- und Kodierungsschemas aus den geordneten Modulations- und Kodierungsschemata, um die Mengen-Aufteilung der Modulations- und Kodierungsschemata durchzuführen; wobei eine Anzahl von Modulations- und Kodierungsschemata, welche in der Mehrzahl von aufgeteilten Mengen von Modulations- und Kodierungsschemata enthalten sind, gleich oder unterschiedlich ist, und wobei die Schnittmengen von unterschiedlichen Mengen von Modulations- und Kodierungsschemata alle leere Mengen sind;
Ordnen eines Teils oder der Gesamtheit der Mehrzahl von Modulations- und Kodierungsschemata gemäß einer Modulationsschema- und Kodierungs-Rate, und Auswählen des Modulations- und Kodierungsschemas aus den geordneten Modulations- und Kodierungsschemata, um die Mengen-Aufteilung der Modulations- und Kodierungsschemata durchzuführen; wobei eine Anzahl von Modulations- und Kodierungsschemata, welche in der Mehrzahl von aufgeteilten Mengen von Modulations- und Kodierungsschemata enthalten sind, gleich oder unterschiedlich ist, und wobei die Schnittmengen von zwei beliebigen unterschiedlichen Mengen von Modulations- und Kodierungsschemata nicht alle leere Mengen sind;
Ordnen eines Teils oder der Gesamtheit der Mehrzahl von Modulations- und Kodierungsschemata gemäß einer Modulationsschema- und Kodierungs-Rate, Transponieren eines Teils von benachbarten Modulations- und Kodierungsschemata in der Mehrzahl von geordneten Modulations- und Kodierungsschemata, und Auswählen des Modulations- und Kodierungsschemas aus der Mehrzahl von transponierten Modulations- und Kodierungsschemata, um eine Mengen-Aufteilung der Modulations- und Kodierungsschemata durchzuführen, und wobei die transponierten Modulations- und Kodierungsschemata zu unterschiedlichen Mengen von Modulations- und Kodierungsschemata gehören; wobei die Anzahl von Modulations- und Kodierungsschemata, welche in der Mehrzahl von aufgeteilten Mengen von Modulations- und Kodierungsschemata enthalten sind, gleich oder unterschiedlich ist, und wobei die Schnittmengen von unterschiedlichen Mengen von Modulations- und Kodierungsschemata alle leere Mengen sind.

2. Verfahren nach Anspruch 1, wobei, dass das Modulations- und Kodierungsschema und/oder die Ressourcengröße der Gruppe statisch ist, bedeutet, dass das Modulations- und Kodierungsschema oder die Menge von Modulations- und Kodierungsschemata, welche von der Gruppe unterstützt wird, vorgegeben oder festgesetzt ist; und/oder dass die Ressourcengröße oder die Menge von Ressourcengrößen, welche von der Gruppe unterstützt wird, vorgegeben oder festgesetzt ist, wohingehend, dass das Modulations- und Kodierungsschema und/oder die Ressourcengröße der Gruppe quasi-statisch ist, bedeutet, dass die Menge von Modulations- und Kodierungsschemata oder die Kennung einer Menge von Modulations- und Kodierungsschemata, welche von der Gruppe unterstützt werden, nicht festgesetzt sind; oder dass ein oder mehrere Modulations- und Kodierungsschemata in der Menge von Modulations- und Kodierungsschemata, welche von der Gruppe unterstützt wird, nicht festgesetzt sind.

3. Verfahren nach Anspruch 1, wobei, dass das Modulations- und Kodierungsschema und/oder die Ressourcengröße der Gruppe quasi-statisch ist, bedeutet, dass die Ressourcengröße oder die Menge von Ressourcengrößen, welche von der Gruppe unterstützt wird, nicht festgesetzt sind; oder eine oder mehrere Ressourcengrößen in der Menge von Ressourcengrößen, welche von der Gruppe unterstützt wird, nicht festgesetzt sind.

4. Verfahren nach Anspruch 1 oder Anspruch 3, wobei die Basisstation ferner das Modulations- und Kodierungsschema oder die Menge von Modulations- und Kodierungsschemata, welche von der Gruppe unterstützt wird, mit einem oder einer Kombination der folgenden Elemente ändert: ein Gruppenkonfiguration-Informationselement, ein Gruppenressourcenzuweisung-Informationselement, eine sekundäre Super-Frame-Kopfzeile.

5. Verfahren nach Anspruch 1, wobei das Verfahren ferner umfasst, dass die Basisstation Modulations- und Kodierungsinformation, welche der Gruppe entspricht, über die sekundäre Super-Frame-Kopfzeile sendet; wobei die Modulations- und Kodierungsinformation mindestens eines der folgenden Elemente umfasst: die Anzahl von Mengen von Modulations- und Kodierungsschemata, die Kennung von jeder Menge von Modulations- und Kodierungsschemata, den Modulations- und Kodierungsschema-Index, welcher in jeder Menge von Modulations- und Kodierungsschemata enthalten ist, die Kennung der Menge von Modulations- und Kodierungsschemata, welche von jeder Gruppe unterstützt wird, und/oder den Index eines Modulations- und Kodierungsschemas, welches von der Gruppe unterstützt wird, die Gruppengröße oder Menge von Gruppengrößen, welche von jeder Gruppe unterstützt wird, die Paketlänge der hybriden automatischen Wiederholungsanfrage oder die Menge von Längen, welche von jeder Gruppe unterstützt wird.

6. Verfahren nach Anspruch 1, wobei das Verfahren ferner umfasst, dass die Basisstation das Gruppenressourcenzuweisung-Informationselement über den A-MAP-Steuerkanal sendet; wobei das Gruppenressourcenzuweisung-Informationselement mindestens eines der folgenden Elemente umfasst: Informationselement-Typ, Gruppenkennung, Kennung der Modulations- und Kodierungsmenge, Index von jedem Modulations- und Kodierungsschema in der Menge von Modulations- und Kodierungsschemata, die Anzahl von Nutzern, welche der Gruppe neu beitreten, Kennungen der Nutzer, welche der Gruppe neu beitreten, Index der Nutzer, welche der Gruppe neu hinzugefügt wurden, in einem Nutzerbitmap, die Anzahl von Nutzern, welche die Gruppe verlassen, und Index der Nutzer, welche die Gruppe verlassen, in dem Nutzerbitmap, wobei das Gruppenressourcenzuweisung-Informationselement ferner verwendet wird, um mindestens eine der folgenden Funktionen zu implementieren: Ressourcenzuweisung der Nutzer in der Gruppe, Verlassen der Gruppe durch einen oder mehrere Nutzer, Anzeigen der Kennung der Menge von Modulations- und Kodierungsschemata, welche von der Gruppe unterstützt werden, Aktualisieren der Kennung der Menge von Modulations- und Kodierungsschemata, welche von der Gruppe unterstützt werden, Anzeigen des Index des Modulations- und Kodierungsschemas, welches von der Gruppe unterstützt wird, und Aktualisieren des Index des Modulations- und Kodierungsschemas, welches von der Gruppe unterstützt wird.

7. Verfahren nach Anspruch 1, wobei das Verfahren ferner umfasst, dass die Basisstation das Gruppenkonfiguration-Informationselements über den A-MAP Steuerkanal oder Datenkanal sendet; wobei das Gruppenkonfiguration-Informationselement mindestens eines der folgenden Elemente umfasst: Informationselement-Typ, Nachrichtentyp, Gruppenkennung, Kennung der Modulations- und Kodierungsmenge, Index von jedem Modulations- und Kodierungsschema in der Menge von Modulations- und Kodierungsschemata, die Anzahl von Nutzern, welche der Gruppe neu beitreten, Kennungen der Nutzer, welche der Gruppe neu beitreten, Index der Nutzer, welche der Gruppe neu hinzugefügt wurden, in dem Nutzerbitmap, die Anzahl von Nutzern, welche die Gruppe verlassen, und Index der Nutzer, welche die Gruppe verlassen, in dem Nutzerbitmap, die Multicast-Kennung der Gruppe, wobei das Gruppenkonfiguration-Informationselement ferner verwendet wird, um mindestens eine der folgenden Funktionen zu implementieren: Beitreten zu der Gruppe von einem oder mehreren Nutzern, Verlassen der Gruppe durch einen oder mehrere Nutzer, Anzeigen der Kennung der Menge von Modulations- und Kodierungsschemata, welche von der Gruppe unterstützt werden, Aktualisieren der Kennung der Menge von Modulations- und Kodierungsschemata, welche von der Gruppe unterstützt werden, Anzeigen des Index des Modulations- und Kodierungsschemas, welches von der Gruppe unterstützt wird, und Aktualisieren des Index des Modulations- und Kodierungsschemas, welches von der Gruppe unterstützt wird.

8. Verfahren nach Anspruch 7, wobei die Basisstation das Gruppenkonfiguration-Informationselement über den A-MAP Steuerkanal oder den Datenkanal sendet und wobei, wenn das Gruppenkonfiguration-Informationselement einem Nutzer entspricht, das Verfahren ferner umfasst:
dass die Basisstation zyklische Redundanz-Checkcodes in dem Gruppenkonfiguration-Informationselement und die Nutzerkennung dieses Nutzers verbirgt;
dass die Basisstation das Gruppenkonfiguration-Informationselement von der Basisstation über den A-MAP Steuerkanal oder den Datenkanal sendet, wobei, wenn das Gruppenkonfiguration-Informationselement einer Mehrzahl von Nutzern entspricht, das Verfahren ferner umfasst:
dass die Basisstation zyklische Redundanz-Checkcodes in dem Gruppenkonfiguration-Informationselement und die Multicast-Kennung der Gruppe verbirgt; oder dass die Basisstation die zyklischen Redundanz-Checkcodes in dem Gruppenkonfiguration-Informationselement nicht verbirgt.

9. Verfahren nach Anspruch 1, wobei der Typ der Basisstation einer der folgenden ist: Makro-Basisstation, Mikro-Basisstation, Pico-Basisstation und Femto-Basisstation; wobei die Verfahren zum Einrichten der Gruppe von verschiedenen Basisstationstypen unterschiedlich oder gleich sind.

10. Verfahren nach Anspruch 9, wobei, dass die Verfahren zum Einrichten der Gruppe unterschiedlich sind, bedeutet, dass mindestens einer der folgenden Parameter unterschiedlich ist: die Anzahl von Mengen von Modulations- und Kodierungsschemata, die Kennung von jeder Menge von Modulations- und Kodierungsschemata, der Index des Modulations- und Kodierungsschemas, welches in jeder Modulations- und Kodierungsmenge enthalten ist, die Kennung der Menge von Modulations- und Kodierungsschemata, welche von jeder Gruppe unterstützt wird, der Index des Modulations- und Kodierungsschemas, welches von jeder Gruppe unterstützt wird, die Gruppengröße oder die Menge von Gruppengrößen, welche von jeder Gruppe unterstützt werden, die Paketlänge einer hybriden automatischen Wiederholungsanfrage oder die Paketlängen-Menge von hybriden automatischen Wiederholungsanfragen, welche von jeder Gruppe unterstützt wird.

## Revendications

1. Procédé de traitement d'allocation de ressources de groupe, comprenant :
établir, par une station de base, un groupe selon une technique de modulation et de codage et/ou une taille de ressources (S202), ledit groupe étant utilisé pour allouer une ressource à un ou plusieurs utilisateurs et ladite taille de ressources étant une ou plusieurs tailles de ressources prises en charge par le groupe ;
la technique de modulation et de codage et/ou la taille de ressources prises en charge par le groupe étant statiques ou quasi-statiques (S204) ;
**caractérisé par le fait que** chaque technique de modulation et de codage est identifiée avec un indice de bit binaire, et chaque ensemble de techniques de modulation et de codage est identifié avec un identificateur de bit binaire ; la station de base utilise en outre un élément d'informations d'allocation de ressources de groupe et/ou un élément d'informations de configuration de groupe pour notifier au moins l'un des paramètres suivants : un ensemble de techniques de modulation et de codage, un identificateur d'ensemble de techniques de modulation et de codage, un indice de technique de modulation et de codage, une taille de ressources, un ensemble de tailles de ressources, une longueur de paquet de demande de répétition automatique hybride et un ensemble de longueurs de paquet de demande de répétition automatique hybride ;
l'établissement, par la station de base, d'un groupe selon la technique de modulation et de codage et/ou la taille de ressources comprend : la division, par la station de base, d'une pluralité de techniques de modulation et de codage prises en charge par elle-même en un ou plusieurs ensembles de techniques de modulation et de codage, chaque groupe prenant en charge un ensemble de techniques de modulation et de codage ;
les manières de division comprenant au moins l'une des opérations suivantes :
trier une partie ou la totalité de ladite pluralité de techniques de modulation et de codage selon une technique de modulation et une vitesse de codage, et sélectionner une partie ou la totalité des techniques de modulation et de codage triées en tant qu'ensemble de techniques de modulation et de codage ;
trier une partie ou la totalité de ladite pluralité de techniques de modulation et de codage selon une technique de modulation et une vitesse de codage, et sélectionner ensuite la technique de modulation et de codage parmi les techniques de modulation et de codage triées pour réaliser la division en ensemble de techniques de modulation et de codage ; les nombres des techniques de modulation et de codage incluses dans la pluralité d'ensembles de techniques de modulation et de codage divisées étant identiques ou différents, et les intersections de différents ensembles de techniques de modulation et de codage étant toutes des ensembles vides ;
trier une partie ou la totalité de ladite pluralité de techniques de modulation et de codage selon une technique de modulation et une vitesse de codage, et sélectionner ensuite la technique de modulation et de codage parmi les techniques de modulation et de codage triées pour réaliser la division en ensemble de techniques de modulation et de codage ; les nombres des techniques de modulation et de codage incluses dans la pluralité d'ensembles de techniques de modulation et de codage divisées étant identiques ou différents, et les intersections de deux ensembles quelconques différents de techniques de modulation et de codage n'étant pas toutes des ensembles vides ;
trier une partie ou la totalité de ladite pluralité de techniques de modulation et de codage selon une technique de modulation et une vitesse de codage, transposer une partie de techniques de modulation et de codage adjacentes dans la pluralité de techniques de modulation et de codage triées, et sélectionner ensuite la technique de modulation et de codage parmi la pluralité de techniques de modulation et de codage transposées pour réaliser la division en ensemble de techniques de modulation et de codage, et les techniques de modulation et de codage transposées appartiennent à des ensembles de techniques de modulation et de codage différents ; les nombres des techniques de modulation et de codage incluses dans la pluralité d'ensembles de techniques de modulation et de codage divisées étant identiques ou différents, et les intersections d'ensembles différents de techniques de modulation et de codage étant toutes des ensembles vides.

2. Procédé selon la revendication 1, dans lequel le fait que la technique de modulation et de codage et/ou la taille de ressources du groupe soient statiques signifie que la technique de modulation et de codage ou l'ensemble de techniques de modulation et de codage pris(e) en charge par le groupe est prédéterminé(e) ou fixe ; et/ou la taille de ressources ou l'ensemble de tailles de ressources pris(e) en charge par le groupe est prédéterminé(e) ou fixe, tandis que le fait que la technique de modulation et de codage et/ou la taille de ressources du groupe soient quasi-statiques signifie que l'ensemble de techniques de modulation et de codage ou l'identificateur d'ensemble de techniques de modulation et de codage pris en charge par le groupe n'est pas fixe ; ou une ou plusieurs techniques de modulation et de codage dans l'ensemble de techniques de modulation et de codage pris en charge par le groupe ne sont pas fixes.

3. Procédé selon la revendication 1, dans lequel le fait que la technique de modulation et de codage et/ou la taille de ressources du groupe soient quasi-statiques signifie que : la taille de ressources ou l'ensemble de tailles de ressources pris(e) en charge par le groupe n'est pas fixe ; ou une ou plusieurs tailles de ressources dans l'ensemble de tailles de ressources pris en charge par le groupe ne sont pas fixes.

4. Procédé selon l'une ou l'autre de la revendication 1 et de la revendication 3, dans lequel la station de base change en outre la technique de modulation et de codage ou l'ensemble de techniques de modulation et de codage pris(e) en charge par le groupe par l'intermédiaire de l'un parmi ou d'une combinaison de : un élément d'informations de configuration de groupe, un élément d'informations d'allocation de ressources de groupe, un en-tête de super-trame secondaire.

5. Procédé selon la revendication 1, le procédé comprenant en outre :
envoyer, par la station de base, des informations de modulation et de codage correspondant au groupe par l'intermédiaire de l'en-tête de super-trame secondaire ; les informations de modulation et de codage comprenant au moins l'un des éléments suivants : le nombre d'ensembles de techniques de modulation et de codage, l'identificateur de chaque ensemble de techniques de modulation et de codage, l'indice de technique de modulation et de codage inclus dans chaque ensemble de techniques de modulation et de codage, l'identificateur d'ensemble de techniques de modulation et de codage pris en charge par chaque groupe et/ou l'indice de technique de modulation et de codage prise en charge par chaque groupe, une taille de groupe ou un ensemble de tailles de groupe pris(e) en charge par chaque groupe, la longueur de paquet de demande de répétition automatique hybride ou l'ensemble de longueurs pris(e) en charge par chaque groupe.

6. Procédé selon la revendication 1, ledit procédé comprenant également :
envoyer, par la station de base, l'élément d'informations d'allocation de ressources de groupe par l'intermédiaire d'un canal de commande A-MAP ; l'élément d'informations d'allocation de ressources de groupe comprenant au moins l'un des éléments suivants : un type d'élément d'informations, un identificateur de groupe, un identificateur d'ensemble de modulation et de codage, un indice de chaque technique de modulation et de codage dans l'ensemble de techniques de modulation et de codage, le nombre d'utilisateurs ayant récemment rejoint le groupe, des identificateurs des utilisateurs ayant récemment rejoint le groupe, un indice des utilisateurs récemment ajoutés au groupe dans une table de bits d'utilisateur, le nombre d'utilisateurs quittant le groupe, et un indice des utilisateurs quittant le groupe dans la table de bits d'utilisateur, en outre, l'élément d'informations d'allocation de ressources de groupe est utilisé pour mettre en oeuvre au moins l'une des fonctions suivantes : une allocation de ressources des utilisateurs dans le groupe, une sortie du groupe par un ou plusieurs utilisateurs, une notification de l'identificateur de l'ensemble de techniques de modulation et de codage pris en charge par le groupe, une mise à jour de l'identificateur de l'ensemble de techniques de modulation et de codage pris en charge par le groupe, une notification de l'indice de la technique de modulation et de codage prise en charge par le groupe, et une mise à jour de l'indice de la technique de modulation et de codage prise en charge par le groupe.

7. Procédé selon la revendication 1, ledit procédé comprenant également :
envoyer, par la station de base, l'élément d'informations de configuration de groupe par l'intermédiaire du canal de commande A-MAP ou d'un canal de données ; l'élément d'informations de configuration de groupe comprenant au moins l'un des éléments suivants : un type d'élément d'informations, un type de message, un identificateur de groupe, un identificateur d'ensemble de modulation et de codage, un indice de chaque technique de modulation et de codage dans l'ensemble de techniques de modulation et de codage, le nombre d'utilisateurs ayant récemment rejoint le groupe, des identificateurs des utilisateurs ayant récemment rejoint le groupe, un indice des utilisateurs récemment ajoutés au groupe dans la table de bits d'utilisateur, le nombre d'utilisateurs quittant le groupe, et un indice des utilisateurs quittant le groupe dans la table de bits d'utilisateur, un identificateur de multidiffusion du groupe, en outre, l'élément d'informations de configuration de groupe est utilisé pour mettre en oeuvre au moins l'une des fonctions suivantes : un ralliement au groupe d'un ou plusieurs utilisateurs, une sortie du groupe par un ou plusieurs utilisateurs, une notification de l'identificateur de l'ensemble de techniques de modulation et de codage pris en charge par le groupe, une mise à jour de l'identificateur de l'ensemble de techniques de modulation et de codage pris en charge par le groupe, une notification de l'indice de la technique de modulation et de codage prise en charge par le groupe, et une mise à jour de l'indice de la technique de modulation et de codage prise en charge par le groupe.

8. Procédé selon la revendication 7, dans lequel la station de base envoie l'élément d'informations de configuration de groupe par l'intermédiaire du canal de commande A-MAP ou du canal de données, et dans le cas où ledit élément d'informations de configuration de groupe correspond à un utilisateur, le procédé comprend également :
masquer, par la station de base, des codes de vérification de redondance cyclique dans l'élément d'informations de configuration de groupe et l'identificateur d'utilisateur de cet utilisateur ;
envoyer, par la station de base, l'élément d'informations de configuration de groupe par l'intermédiaire du canal de commande A-MAP ou du canal de données, et dans le cas où ledit élément d'informations de configuration de groupe correspond à une pluralité d'utilisateurs, le procédé comprend également :
masquer, par la station de base, les codes de vérification de redondance cyclique dans l'élément d'informations de configuration de groupe et l'identificateur de multidiffusion du groupe, ou ne pas masquer, par la station de base, les codes de vérification de redondance cyclique dans l'élément d'informations de configuration de groupe.

9. Procédé selon la revendication 1, dans lequel le type de ladite station de base est l'un parmi les types suivants :
une macro-station de base, une micro-station de base, une pico-station de base, et une femto-station de base ; les manières d'établissement de groupe de différents types de BS étant différentes ou les mêmes.

10. Procédé selon la revendication 9, dans lequel le fait que lesdites manières d'établissement de groupe soient différentes signifie qu'au moins l'un des différents paramètres suivants est différent : le nombre d'ensembles de techniques de modulation et de codage, l'identificateur de chaque ensemble de techniques de modulation et de codage, l'indice de la technique de modulation et de codage incluse dans chaque ensemble de modulation et de codage, l'identificateur de l'ensemble de techniques de modulation et de codage pris en charge par chaque groupe, l'indice de la technique de modulation et de codage prise en charge par chaque groupe, la taille de groupe ou l'ensemble de tailles de groupe pris(e) en charge par chaque groupe, la longueur de paquet de demande de répétition automatique hybride ou l'ensemble de longueurs de paquet de demande de répétition automatique hybride pris(e) en charge par chaque groupe.
